# EUROPÄISCHE PATENTANMELDUNG

(11) **EP 0 694 328 A2**
(43) Veröffentlichungstag der Anmeldung: **31.01.1996**
(21) Anmeldenummer: 95106050.8
(22) Anmeldetag: 22.04.1995
(51) Int. Cl.: B01D 53/75, B01D 53/46

(54) **Verfahren zur Abgasreinigung**

(30) Priorität: 04.05.1994 DE 4415719
(71) Anmelder: METALLGESELLSCHAFT AG, D-60323 Frankfurt am Main (DE)
(72) Erfinder: Eschenburg, Joachim, D-61381 Friedrichsdorf (DE); Schaub, Georg, Dr., D-61440 Oberursel (DE); Ströder, Michael, Dr., D-61267 Neu-Anspach (DE)

(57) **Zusammenfassung**

Es wird ein Verfahren zur Abtrennung von HF, HCl, SO₂, polyhalogenierten Kohlenwasserstoffen, Hg, Quecksilberverbindungen und Staub aus einem Abgas beschrieben, bei dem das verunreinigte Abgas bei einer Temperatur von 70 bis 180 °C oberhalb des Taupunkts in einem Reaktor mit einem Absorptionsmittel in Kontakt gebracht wird, die Gas-Feststoff-Suspension anschließend in einen Vorabscheider geführt wird, in dem die Abscheidung des größten Teils der Feststoffe erfolgt, die vorgereinigte Gas-Feststoff-Suspension danach in einen Endabscheider geführt wird, in den die gesamte Menge des Absorptionsmittels eingebracht sowie die im Gasstrom suspendierten Feststoffe nahezu quantitativ abgetrennt werden, die im Endabscheider anfallenden Feststoffe in den Reaktor zurückgeführt und ein Teilstrom der im Vorabscheider anfallenden Feststoffe in den Reaktor zurückgeführt wird, während ein zweiter Teilstrom der im Vorabscheider anfallenden Feststoffe ausgeschleust und deponiert wird.

## Beschreibung

Die Erfindung bezieht sich auf ein Verfahren zur Abtrennung von HF, HCl, SO₂, polyhalogenierten Kohlenwasserstoffen, Hg, Quecksilberverbindungen und Staub aus einem Abgas.

Bei der Verbrennung fossiler Brennstoffe, die mit dem Ziel der Energiegewinnung durchgeführt wird, bei der Verbrennung von Müll, Klärschlamm und Industrieabfällen sowie bei der Durchführung chemischer Prozesse entstehen Abgase, die durch HF, HCl, SO₂, polyhalogenierte Kohlenwasserstoffe, Hg, Quecksilberverbindungen und Staub verunreinigt sind, wobei die Verunreinigungen in Abhängigkeit vom jeweiligen Prozeß in unterschiedlichen Mengen im Abgas vorliegen und wobei die Konzentration der Verunreinigungen im Verlauf jedes Prozesses gewissen Schwankungen unterliegt. Beispielsweise sind wegen der unterschiedlichen und wechselnden Zusammensetzung von Müll, Industrieabfällen und Klärschlamm auch die bei der Verbrennung dieser Abfälle entstehenden Abgase mit unterschiedlichen Mengen umweltbelastender Substanzen verunreinigt. Alle Verunreinigungen müssen aber weitgehend aus den Abgasen entfernt werden, bevor diese in die Atmosphäre entlassen werden können, denn sehr viele Verunreinigungen entfalten bereits in geringer Konzentration toxische Wirkungen gegenüber Menschen, Tieren und Pflanzen.

Der Staub, der in den Abgasen in einer Menge bis zu 50.000 mg/Nm³ vorliegt, wird in Zyklonen, Elektrofiltern, Gewebefiltern oder Wäschern abgeschieden, wobei das zu entstaubende Abgas auch mehrere dieser Apparate durchlaufen kann. Die bekannten Entstaubungsverfahren lassen heute auch im großtechnischen Maßstab Reststaubgehalte von < 5 mg Nm³ zu. Eine möglichst weitgehende Entstaubung ist deshalb erforderlich, weil der Staub vor allem toxisch wirkende Schwermetalle, Schwermetallverbindungen und polyhalogenierte Dibenzodioxine und Dibenzofurane adsorbiert.

SO₂ und HCl liegen in den Abgasen in einer Menge von jeweils bis zu 7.000 mg/Nm³ vor; außerdem ist HF in Mengen bis zu 100 mg/Nm³ vorhanden. Diese gasförmigen Verbindungen bilden mit dem in der Atmosphäre enthaltenen Wasserdampf Säuren, die sehr häufig als Aerosole vorliegen, und haben eine toxische Wirkung. Sie werden daher weitgehend abgetrennt, wobei mit den bekannten Reinigungsverfahren im technischen Maßstab SO₂-Restgehalte < 20 mg/Nm³, HCl-Restgehalte < 5 mg/Nm³ und HF-Restgehalte < 1 mg/Nm³ verwirklicht werden können. Zur Abtrennung von SO₂, HCl und HF werden trocken, quasi-trocken und naß arbeitende Reinigungsverfahren eingesetzt, wobei auch mehrere Verfahren hintereinander geschaltet werden können. Bei diesen Verfahren wird als Reaktionsmittel vor allem Ca(OH)₂, CaO, CaCO₃, NaOH und Na₂CO₃ verwendet. Besondere Bedeutung hat die Sprühabsorption erlangt, bei der eine wässrige Suspension von Ca(OH)₂ mit den sauren Schadstoffen SO₂, HCl und HF reagiert, das Wasser verdampft und ein festes Reaktionsprodukt anfällt, das auch Staub und andere Schadstoffe enthält. Daneben sind Waschverfahren bekannt, die eine sehr weitgehende Abscheidung der Schadstoffe SO₂, HCl und HF zulassen.

Die Schwermetalle und die Schwermetallverbindungen, vor allem Quecksilber und Quecksilberverbindungen, sowie die polyhalogenierten Dibenzodioxine und Dibenzofurane liegen in den Abgasen in geringerer Konzentration vor. Diese Substanzen wirken allerdings extrem toxisch und müssen daher nahezu quantitativ aus den Abgasen entfernt werden, was nach dem Stand der Technik vorzugsweise durch Absorptions- und/oder Waschverfahren erfolgt. Als Absorptionsmittel hat sich insbesondere Aktivkohle bewährt, während die Waschverfahren sowohl im sauren als auch im alkalischen Bereich arbeiten. Dioxine und Furane werden außerdem durch katalytische Umwandlung zersetzt.

Die technische Anwendbarkeit der bekannten Abgasreinigungsverfahren hängt insbesondere davon ab, daß sie möglichst geringe Investitions- und Betriebskosten verursachen und daß sie Verfahrensprodukte liefern, die in möglichst geringer Menge anfallen und ohne größere Schwierigkeiten deponiert werden können. Um einen möglichst großen Abscheidegrad für die vorgenannten Verunreinigungen zu erzielen, ist es üblich, daß mehrere Reinigungsprozesse miteinander kombiniert werden.

Beispielsweise ist aus der EP-PS 0 25 35 63 ein Verfahren zur Beseitigung von Quecksilberdampf und/oder Dampf schädlicher organischer Verbindungen und/oder Stickstoffoxiden aus einem von einer Verbrennungsanlage abgehenden heißen Abgasstrom bekannt, der außerdem Flugasche und saure Bestandteile - also SO₂ und HCl - enthält. Bei diesem bekannten Verfahren wird der zu reinigende Abgasstrom bei einer Temperatur von 135 bis 400 °C in eine Zerstäubungs-Absorptionskammer geleitet, in der eine wässrige Flüssigkeit zerstäubt wird, die ein basisches Absorptionsmittel enthält. Das Abgas kühlt sich im Sprühabsorber durch Verdampfung des Wassers auf 180 bis 90 °C ab, und gleichzeitig werden die sauren Bestandteile aus dem Abgas gebunden, wobei ein partikelförmiges Material gebildet wird, das die Reaktionsprodukte zwischen dem basischen Absorptionsmittel und den sauren Bestandteilen des Abgases sowie nicht umgesetztes Absorptionsmittel enthält. Das partikelförmige Reaktionsprodukt wird zusammen mit eventuell vorhandener Flugasche in einem Partikelabscheider stromabwärts zur Zerstäubungs-Absorptionskammer von dem Abgas getrennt. Beim bekannten Verfahren ist außerdem vorgesehen, daß pulverförmiger aktiver Kohlenstoff in einer Menge von 1 bis 800 mg/Nm³ Abgas zumindest an einer Stelle, die stromaufwärts der Zerstäubungs-Absorptionskammer, in der Zerstäubungs-Absorptionskammer oder stromabwärts zur Zerstäubungs-Absorptionskammer, aber stromaufwärts zum Partikelabscheider, in den Abgasstom eingebracht wird. Der pulverförmige aktive Kohlenstoff wird zusammen mit den partikelförmigen Reaktionsprodukten im Partikelabscheider abgetrennt.

Aus der EP-OS 0 30 12 72 ist ein Verfahren zur Abgasreinigung mittels trocken eingebrachter pulvriger oder körniger Sorbenzien bei weniger als 500 °C in einer Niedertemperaturstufe bekannt. In der Niedertemperaturstufe werden saure und/oder oxidierbare Schadgase, wie z. B. SOₓ, HCl, HF, NOₓ, CO, CnHm vom Sorbens abgebunden, wobei das Abgas zumindest teilweise vor dem Eintritt in die Niedertemperaturstufe vom Flugstaub befreit wurde und mindestens 2 Volumenprozent Sauerstoff enthält. Bei dem bekannten Verfahren ist vorgesehen, daß dem im Abgasstrom ausgebreiteten Sorptionsbett, das insbesondere auf einem Flächenfilter angeordnet ist, bei 30 bis 400 °C im nahstöchiometrischen Verhältnis zu den Schadgasen frisches und/oder rezirkuliertes Sorbens zugeführt wird, was dazu führt, daß dem Abgasstrom Sorbens in einem mehrfach überstöchiometrischen Verhältnis über eine lange mittlere Verweilzeit dargeboten wird. Bei dem bekannten Verfahren ist ferner vorgesehen, daß Ca(OH)₂ als Sorbens verwendet wird. Schließlich wird in der EP-OS 0 30 12 72 eine Vorrichtung zur Durchführung des Verfahrens vorgeschlagen, bei der zwischen einer Brennkammer und dem Kamin im Temperaturbereich zwischen 30 und 130 °C ein das Absorptionsmittel enthaltender Reaktor angeordnet ist, dem frisches Absorptionsmittel zugeführt wird und dem ein Filter nachgeordnet ist. Dem Filter wird teilweise verbrauchtes Absorptionsmittel entnommen, welches in die Brennkammer gelangt. Zwischen der Brennkammer und dem Reaktor befindet sich eine Abgasleitung sowie ein Abscheider, wobei dem Abscheider das zumindest teilweise mit Schadgasen beladene Sorbens entnommen wird.

Aus der EP-PS 0 22 51 78 ist ein Verfahren zur Reinigung eines Rauchgases aus der Verbrennung von schwefelhaltigen Brennstoffen bekannt, bei dem ein alkalisches Absorptionsmittel, z. B. CaO oder Ca(OH)₂ in den Rauchgaskanal des Verbrennungsofens gegeben und das gebildete Produkt aus dem Rauchgas abgetrennt wird, wobei das Absorptionsmittel nach der Einstellung des Taupunkts an einem ersten Zugabepunkt trocken zugeführt wird, so daß die Rauchgastemperatur 5 bis 50°C oberhalb des Taupunkts des Rauchgases liegt. Der Taupunkt des Rauchgases wird durch Zugabe von Wasser und die Absorptionstemperatur wird durch Wärmeentzug in einem Wärmeaustauscher eingestellt. Ein Gemisch aus dem Reaktionsprodukt und nicht reagiertem Absorptionsmittel wird in den Rauchgasstrom an einen Punkt zurückgeführt, der vor dem Zugabepunkt des frischen Absorptionsmittels liegt. Die Abtrennung der Feststoffe erfolgt in zwei Abscheidern, wobei das zurückgeführte Feststoffgemisch eine vom ersten oder zweiten Abscheider oder von beiden Abscheidern abgetrennte Mischung ist.

Schließlich offenbart die WO 88/06484 ein Verfahren zur Reinigung von Verbrennungsabgasen, bei dem die Abgase zunächst mit Wasser gekühlt und dann mit einem Absorptionsmittel in einem Reaktor zur Reaktion gebracht werden. Das Reaktionsprodukt wird in einem Staubabscheider, z.B. einem Elektrofilter oder einem Filtrationsabscheider, abgetrennt und teilweise in den Reaktor zurückgeführt. Das frische Absorptionsmittel wird dem Rauchgas bei einer Temperatur von 65 bis 180°C vor dem Reaktor zugeführt.

Die bekannten Verfahren haben den Nachteil, daß das Absorptionsmittel dem Abgas in stöchiometrischem Überschuß zugegeben werden muß, um eine weitgehende Entfernung der Schadstoffe zu erreichen. Bei der Verwendung von CaO und Ca(OH)₂ als Absorptionsmittel beträgt das stöchiometrische Verhältnis von Schadstoffen zum Absorptionsmittel im technischen Maßstab erfahrungsgemäß mindestens 1 : 1,4, wobei der Abscheidegrad für SO₂ und HCl bei ca. 90 % liegt. Der Absorptionsmittelüberschuß kann nicht mehr von den Reaktionsprodukten abgetrennt werden und wird daher deponiert. Dieser Mangel vermindert die Effizienz der Abgasreinigungsverfahren. Der Erfindung liegt daher die Aufgabe zugrunde, ein Verfahren zur Abgasreinigung zu schaffen, das sowohl einen Abscheidegrad > 90 % als auch eine weitgehende Ausnutzung der Absorptionsmittel ermöglicht und insbesondere bei Verwendung von CaO und Ca(OH)₂ als Absorptionsmittel ein stöchiometrisches Verhältnis der Schadstoffe zu den Absorptionsmitteln von < 1:1,4 und einen Abscheidegrad der Schadstoffe von ca. 90 % ermöglicht. I. U. soll das erfindungsgemäße Verfahren mit einer geringen Anzahl sowie technisch einfachen Prozeßapparaten auskommen.

Die der Erfindung zugrundeliegende Aufgabe wird dadurch gelöst, daß
a) das verunreinigte Abgas bei einer Temperatur von 70 bis 180 °C oberhalb des Taupunkts in einem Reaktor mit einem Absorptionsmittel in Kontakt gebracht wird,
b) die Gas-Feststoff-Suspension anschließend in einen Vorabscheider geführt wird, in dem die Abscheidung des größten Teils der Feststoffe erfolgt,
c) die vorgereinigte Gas-Feststoff-Suspension danach in einen Endabscheider geführt wird, in den die gesamte Menge des Absorptionsmittels singebracht wird sowie die im Gasstom suspendierten Feststoffe nahezu quantitativ abgetrennt werden,
d) die im Endabscheider anfallenden Feststoffe in den Reaktor zurückgeführt werden und
e) ein Teilstrom der im Vorabscheider anfallenden Feststoffe in den Reaktor zurückgeführt wird, während ein zweiter Teilstrom der im Vorabscheider anfallenden Feststoffe ausgeschleust und deponiert wird.

Der Kern der Erfindung besteht darin, daß die gesamte Menge des frischen Absorptionsmittels in den Endabscheider eingebracht wird, daß die im Endabscheider abgetrennten Feststoffe dem Reaktor zugeführt werden und daß ein Teilstrom der im Vorabscheider anfallenden Feststoffe aus dem Stoffkreislauf entnommen wird. Hierdurch liegt in der Verfahrensstufe (Endabscheider), in der das Abgas nur noch eine vergleichsweise geringe Schadstoffkonzentration hat, ein sehr hoher Absorptionsmittelüberschuß vor, so daß auch geringe Schadstoffmengen weitgehend vom Absorptionsmittel aufgenommen werden. Durch die Rückführung der im Endabscheider abgeschiedenen Feststoffe in den Reaktor und durch die Entnahme eines Teilstroms der Feststoffe aus dem Vorabscheider wird die Reaktionszeit gesteigert, so daß insgesamt ein hoher Abscheidegrad für die Schadstoffe sowie ein sehr geringer Absorptionsmittelverbrauch resultiert, der bei Verwendung von CaO und Ca(OH)₂ als Absorptionsmittel immer kleiner als die 1,4-fache stöchiometrische Menge ist und in der Regel bei der etwa 1,3-fachen stöchiometrischen Menge liegt, soweit der Abscheidegrad > 90 % beträgt. Im technischen Maßstab ist diese Verminderung des Absorptionsmittelverbrauchs als erheblicher Fortschritt zu werten. Als Absorptionsmittel werden basische Na-, Mg- und/oder Ca-Verbindungen verwendet.

In weiterer Ausgestaltung der Erfindung ist vorgesehen, daß das Abgas vor dem Eintritt in den Reaktor oder im Reaktor durch Mischen mit Wasser auf eine Temperatur von 70 bis 180°C, vorzugsweise 100 bis 130°C, in an sich bekannter Weise abgekühlt wird. Bei diesen Temperaturen wird eine weitgehende Schadstoffabsorption mit einer sehr geringen Absorptionsmittelmenge erreicht.

In weiterer Ausgestaltung der Erfindung ist ferner vorgesehen, daß der Reaktor als Wirbelschichtreaktor, Flugstromreaktor oder Sprühabsorber gestaltet ist. Diese an sich bekannten Prozeßapparate haben sich als betriebssicher erwiesen und verursachen vergleichsweise geringe Investitions- und Betriebskosten.

Nach der Erfindung ist es besonders vorteilhaft, wenn das Absorptionsmittel aus Ca(OH)₂ und/oder CaO besteht sowie einen mittleren Teilchendurchmesser d₅₀ von 5 bis 100 µm hat und wenn das Absorptionsmittel 2 bis 20 Gew% Aktivkohle und/oder Zeolithe enthält. Die nach der Erfindung gewählte Teilchengröße des Absorptionsmittels ermöglicht eine gute Handhabung des Absorptionsmittels. Die Zumischung von Aktivkohle und Zeolithen ermöglicht eine sehr weitgehende Abscheidung der polyhalogenierten Dibenzodioxine und Dibenzofurane sowie der Schwermetalle und Schwermetallverbindungen.

In weiterer Ausgestaltung der Erfindung hat es sich als besonders vorteilhaft erwiesen, wenn der Vorabscheider als Schlauchfilter, Elektroabscheider oder Massenkraftabscheider gestaltet ist und wenn der Endabscheider als Elektroabscheider oder Schlauchfilter gestaltet ist. Diese Prozeßapparate haben sich als betriebssicher erwiesen und verursachen vertretbare Investitions- und Betriebskosten. Als Massenkraftabscheider werden vorzugsweise ein oder mehrere Zyklone verwendet.

Schließlich ist in weiterer Ausgestaltung der Erfindung vorgesehen, daß die Menge des verbrauchten Absorptionsmittels, die mit dem aus dem Vorabscheider ausgeschleusten Feststoff ausgetragen wird, durch Zugabe der gleichen Menge frischen Absorptionsmittels in den Endabscheider ersetzt wird, wobei die Mengen in Abhängigkeit von den im Roh- und/oder Reingas gemessenen Schadstoffkonzentrationen kontinuierlich verändert werden. Durch diese Maßnahme wird erreicht, daß im Endabscheider zu jedem Zeitpunkt des Verfahrens ein ausreichendes Absorptionsmittelangebot zur Verfügung steht.

Gemäß der Erfindung hat es sich als besonders vorteilhaft erwiesen, wenn das erfindungsgemäße Verfahren zur Reinigung von Abgasen verwendet wird, die bei der Verbrennung von Müll und Klärschlamm, der Gewinnung von Energie durch Verbrennung fossiler Brennstoffe oder Biomasse, der Herstellung von Zement, der Sinterung von Erzen und der Herstellung von MgO anfallen. Bei allen Prozessen entstehen Abgase, die HF, HCl, SO₂ polyhalogenierte Kohlenwasserstoffe, Hg, Quecksilberverbindungen und Staub enthalten und die weitgehend gereinigt werden müssen.

Der mit dem erfindungsgemäßen Verfahren erzielte Erfolg besteht darin, daß die Abgase bis zu einem HF-Gehalt < 0,5 mg/Nm³, einem HCl-Gehalt < 5 mg/Nm³, einem SO₂-Gehalt < 25 mg/Nm³, einem Hg-Gehalt < 0,05 µg/Nm³ und einem Gehalt an polyhalogenierten Dibenzodioxinen und Dibenzofuranen < 0,1 ng/Nm³ gereinigt werden.

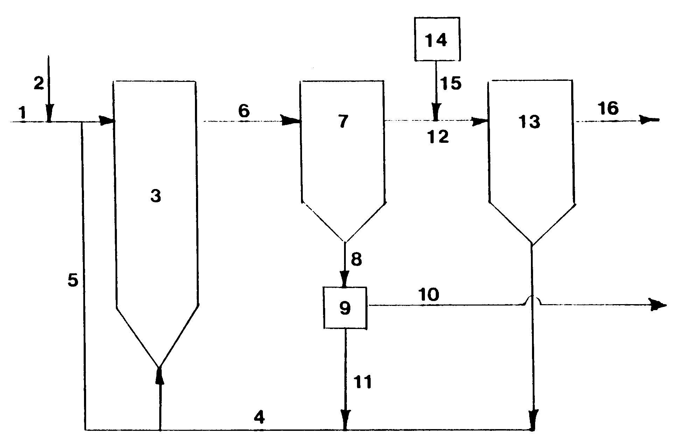

Der Gegenstand der Erfindung wird nachfolgend anhand eines Ausführungsbeispiels und der Zeichnung, die das Fließbild des erfindungsgemäßen Verfahrens zeigt, näher erläutert.

Im Abgaskanal 1 wird das Abgas (Rauchgas) einer Müllverbrennungsanlage, das eine Temperatur von 200 °C, einen Staubgehalt von 10.000 mg/Nm³, einen HCl-Gehalt von 2.200 mg/Nm³ und einen SO₂-Gehalt von 600 mg/Nm³ hat, durch das in der Leitung 2 geführte Wasser auf die Reaktionstemperatur von 130 °C abgekühlt. Anschließend gelangt das abgekühlte Abgas in den Reaktor 3, dem über die Leitung 4 das Absorptionsmittel Ca(OH)₂ zugeführt wird, welches einen mittleren Teilchendurchmesser d₅₀ von ca. 40 µm hat. Das Absorptionsmittel wird dem Reaktor 3 mit dem in der Leitung 5 geführten Teilstrom des abgekühlten Abgases aufgegeben. Im Reaktor 3 reagiert die Hauptmenge der Schadstoffe mit dem Absorptionsmittel, wobei insbesondere CaCl₂ und CaSO₃ gebildet werden.

Aus dem Reaktor 3 wird die Gas-Feststoff-Suspension, deren Feststoffanteil den gesamten Staub, das in geringer Menge vorliegende nicht reagierte Absorptionsmittel sowie die Reaktionsprodukte der Schadstoffe enthält, über die Leitung 6 in den als Schlauchfilter 7 gestalteten Vorabscheider geführt. Im Schlauchfilter 7 reagieren die noch vorhandenen gasförmigen Schadstoffe mit einem Teil des Absorptionsmittels, und die Feststoffe werden weitgehend abgeschieden sowie über die Leitung 8 in den Vorratsbehälter 9 ausgetragen. Ein Feststoff-Teilstrom wird über die Leitung 10 aus dem Verfahrenskreislauf ausgeschleust und deponiert. Ein zweiter Teilstrom der im Vorabscheider abgeschiedenen Feststoffe gelangt über die Leitungen 11 und 4 in den Reaktor 3, wo weiteres noch nicht reagiertes Absorptionsmittel mit den Schadstoffen reagiert.

Das weitgehend von Schadstoffen befreite vorgereinigte Abgas gelangt über die Leitung 12 in den als Schlauchfilter 13 gestalteten Endabscheider. Kurz vor dem Eintritt des Abgases in das Schlauchfilter 13 wird die gesamte Menge des frischen Absorptionsmittels aus dem Vorratsbehälter 14 über die Leitung 15 in die Leitung 12 eingebracht. Im Schlauchfilter 13 liegt also ein großer stöchiometrischer Überschuß des Absorptionsmittels vor, so daß die noch vorhandenen geringen Schadstoffmengen weitgehend gebunden werden. Die im Schlauchfilter 13 abgeschiedenen Feststoffe, die zum größten Teil aus nicht reagiertem Absorptionsmittel bestehen, gelangen über die Leitung 4 in den Reaktor 3. Das gereinigte Abgas verläßt den Endabscheider über die Leitung 16 und hat einen Staubgehalt von 3 mg/Nm³, einen HCl-Gehalt von 4 mg/Nm³ und einen SO₂-Gehalt von 18 mg/nm³. Das bei der Abgasreinigung zunächst gebildete CaSO₃ wird durch den im Abgas vorhandenen Sauerstoff weitgehend zu CaSO₄ oxidiert. Obwohl in bezug auf SO₂ ein hoher Abscheidegrad von 97 % erreicht wird und der Abscheidegrad für HCl sogar > 99 % beträgt, ist für das erfindungsgemäße Verfahren lediglich ein Mol-Verhältnis Ca(OH)₂ zu SO₂ und HCl von 1:1,3 erforderlich. Polyhalogenierte Dibenzodioxine und Dibenzofurane sowie Schwermetalle konnten in dem in Leitung 16 geführten Reingas nicht nachgewiesen werden.

## Patentansprüche

1. Verfahren zur Abtrennung von HF, HCl, SO₂, polyhalogenierten Kohlenwasserstoffen, Hg, Quecksilberverbindungen und Staub aus einem Abgas, bei dem
a) das verunreinigte Abgas bei einer Temperatur von 70 bis 180 °C oberhalb des Taupunkts in einem Reaktor mit einem Absorptionsmittel in Kontakt gebracht wird,
b) die Gas-Feststoff-Suspension anschließend in einen Vorabscheider geführt wird, in dem die Abscheidung des größten Teils der Feststoffe erfolgt,
c) die vorgereinigte Gas-Feststoff-Suspension danach in einen Endabscheider geführt wird, in den die gesamte Menge des Absorptionsmittel eingebracht sowie die suspendierten Feststoffe nahezu quantitativ abgetrennt werden,
d) die im Endabscheider anfallenden Feststoffe in den Reaktor Zurückgeführt werden und
e) ein Teilstrom der im Vorabscheider anfallenden Feststoffe in den Reaktor Zurückgeführt wird, während ein zweiter Teilstrom der im Vorabscheider anfallenden Feststoffe ausgeschleust und deponiert wird.

2. Verfahren nach Anspruch 1, bei dem das Abgas vor dem Eintritt in den Reaktor oder im Reaktor durch Mischen mit Wasser auf eine Temperatur von 70 bis 180°C, vorzugsweise 100 bis 130 °C, abgekühlt wird.

3. Verfahren nach den Ansprüchen 1 bis 2, bei dem der Reaktor als Wirbelschichtreaktor, Flugstromreaktor oder Sprühabsorber gestaltet ist.

4. Verfahren nach den Ansprüchen 1 bis 3, bei dem das Absorptionsmittel aus Ca(OH)₂ und/oder CaO besteht sowie einen mittleren Teilchendurchmesser d₅₀ von 5 bis 500 µm hat.

5. Verfahren nach Anspruch 4, bei dem das Absorptionsmittel 2 bis 20 Gew.-% Aktivkohle und/oder Zeolithe enthält.

6. Verfahren nach den Ansprüchen 1 bis 5, bei dem der Vorabscheider als Schlauchfilter, Elektroabscheider oder Massenkraftabscheider gestaltet ist.

7. Verfahren nach den Ansprüchen 1 bis 6, bei dem der Endabscheider als Elektroabscheider oder Schlauchfilter gestaltet ist.

8. Verfahren nach den Ansprüchen 1 bis 7, bei dem die Menge des verbrauchten Absorptionsmittels, die mit dem aus dem Vorabscheider ausgeschleusten Feststoff ausgetragen wird, durch Zugabe der gleichen Menge frischen Absorptionsmittels in den Endabscheider ersetzt wird, wobei die Mengen in Abhängigkeit von den im Roh- und/oder Reingas gemessenen Schadstoffkonzentrationen kontinuierlich verändert werden.

9. Verwendung des Verfahrens nach den Ansprüchen 1 bis 8 zur Reinigung von Abgasen, die bei der Verbrennung von Müll und Klärschlamm, der Gewinnung von Energie durch Verbrennung fossiler Brennstoffe oder Biomasse, der Herstellung von Zement, der Sinterung von Erzen und der Herstellung von MgO anfallen.
